# EUROPÄISCHE PATENTANMELDUNG

(11) **EP 2 505 949 A2**
(43) Veröffentlichungstag der Anmeldung: **03.10.2012**
(21) Anmeldenummer: 12162520.6
(22) Anmeldetag: 30.03.2012
(51) Int. Cl.: F26B 3/084

(54) **Trockner sowie Verfahren zum Trocknen von nassen Einsatzstoffen**

(30) Priorität: 01.04.2011 DE 102011015808
(71) Anmelder: H S Beratung GmbH & Co. KG, 85356 Freising (DE)
(72) Erfinder: Dr. Steer, Thomas, 85356 Freising (DE)
(74) Vertreter: Alber, Norbert

(57) **Zusammenfassung**

Um bei einem extern über einen Wärmetauscher beheizten Wirbelschichttrockner den abrasiven Verschleiß am Wärmetauscher zu minimieren, wird erfindungsgemäß vorgeschlagen, den insbesondere rohrförmigen Wärmetauscher senkrecht in der Wirbelschicht zu montieren und diese Wärmetauscherrohre entweder vom Beheizungsmedium durchströmen zu lassen oder als Heatpipes von der außerhalb der Wirbelschicht liegenden Beheizungsseite her zu beheizen.

## Beschreibung

### I. Anwendungsgebiet

Die Erfindung betrifft die Trocknung von nassen, insbesondere festen zu trocknenden Produkten, insbesondere Festbrennstoffen, mit Hilfe eines dampfbeheizten Wirbelschichttrockners.

### II. Technischer Hintergrund

Bei Trocknungsverfahren kommen direkte Verfahren und indirekte Verfahren zum Einsatz.

Bei direkten Verfahren wird das heiße Abgas einer Feuerung direkt auf das zu trocknende Produkt aufgegeben, wobei Abgas und Produkt normalerweise im Gleichstrom fließen. Problem der direkten Trocknung ist stets die hohe Temperaturbelastung des Gutes, verbunden mit einer latenten Brandgefahr sowie einer Gefahr der partiellen Verschwelung von Produktteilchen, die zu schnell getrocknet werden, wie z.B. staubförmige Produktteilchen.

Bei indirekten Verfahren wird das Trocknungsmedium (üblicherweise Luft) über Wärmetauscher erhitzt und dann dem Produktstrom zugeführt. Die Aufheiztemperatur des Trocknungsmediums liegt erheblich unter der Temperatur der Abgase bei direkter Trocknung, so dass im Vergleich zur direkten Trocknung ein Vielfaches an Volumen des Trocknungsmediums durch das zu trocknende Gut zu drücken ist. Der Nachteil dieses indirekten Trocknungsverfahrens ist in der Folge erheblicher Platzbedarf sowie ein erheblicher Aufwand an Gebläseleistung. Auch ist der Wirkungsgrad einer indirekten Trocknung in der Regel niedriger als der einer direkten Trocknung.

Um nun den Wirkungsgrad bei der indirekten Trocknung weiter zu erhöhen, ist man dazu übergegangen, die Trocknungsluft mehrmals im Kreis zu führen und dadurch immer stärker mit Wasserdampf zu beladen, um die Wärmeverluste in der Abluft des Trockners zu verringern. Der Partialdruck des Wasserdampfes in der Zu- und Abluft steigt somit an, was die Kondensationstemperatur des Wasserdampfes in der Luft erhöht und somit die physikalische Grenztemperatur als unteres Ende des Trocknungsprozesses heraufsetzt.

Der Nachteil dieser Maßnahme ist jedoch wiederum ein erhöhter Luftmassenstrom, da in der Folge konsequenterweise die zur Trocknung nutzbare Abkühlspanne der Temperatur sinkt und das umzuwälzende Volumen des Trocknungsmediums reziprok ansteigt.

Weiterhin ist bekannt, dass man durch so genannte Brüdenkondensation Dampf, der bei Trocknungsprozessen entsteht, verdichten und auf höherem Druck kondensieren kann, wodurch sich der Prozess mit der bei der Trocknung freiwerdenden Verdampfungsenergie im wesentlichen selbst beheizt (linksläufiger Clausius-Rankine-Prozess). Es versteht sich von selbst, dass die Kondensation räumlich getrennt von der Trocknung erfolgen muss, d.h. über einen Wärmetauscher, in dem das Trocknungsmedium Dampf wird.

Die Brüdenkondensation ist allerdings nur dann sinnvoll, wenn das Trocknungsmedium möglichst vollständig aus Wasserdampf besteht und die Inertgasanteile, also die Gasanteile, die keine Feuchtigkeit aufnehmen, möglichst niedrig sind. Es ist also in diesem Falle erforderlich, auf Wasserdampf als Trocknungsmedium überzugehen.

Im Falle der Brüdenkondensation sind die Brüden von staubförmigen Bestandteilen zu reinigen, sofern eine Verschmutzung der Wärmetauscher vermieden werden soll.

Zur Vergleichmäßigung des indirekten Trocknungsvorganges ist man dazu übergegangen, den Trockner als Wirbelschichttrockner zu bauen.

Bei Wirbelschichttrocknern wird das zu trocknende Produkt in ein Bett aus Inertmaterial - also Material, welches keine Feuchtigkeit aufnimmt - gegeben, das von unten mit der Trocknungsluft angeblasen und somit fluidisiert wird. Es verhält sich wie eine Flüssigkeit, in der das zu trocknende Produkt schwimmt. Es ist wesentlich mehr Inertmaterial vorhanden als zu trocknendes Produkt, so dass das Inertmaterial dem zu trocknenden Produkt die Trocknungstemperatur aufprägt.

Dies führt zu sehr homogenen Trocknungsbedingungen und zu wesentlich rascheren Trocknungsabläufen. Das Trocknungsmedium wird vor dem Einblasen in die Wirbelschicht beheizt und bringt so die zur Trocknung nötige Wärme mit.

Um die Baugröße von Wirbelschichttrocknern zu verringern, ist es möglich, die Wirbelschicht durch Wärmetauscher zu beheizen. Hierdurch verringert sich die Menge an Wärme, die über das Trocknungsmedium zugegeben werden muss, da nun ein Teil der Wärme über die Wärmetauscher zugeführt werden kann.

Das Inertmaterial der Wirbelschicht übernimmt hierdurch die Funktion eines Kontakttrockners, wobei der Wärmetauscher die Wärmeversorgung der Wirbelschicht übernimmt. Das Trocknungsmedium übernimmt nicht mehr die Funktion des Wärmeträgers, sondern lediglich die Funktion des Fluidisierungsmediums der Wirbelschicht.

Der Wärmetauscher wird hierbei vom Heizmedium durchströmt, was zur Erzielung eines guten Wärmeüberganges in die Wirbelschicht einen horizontalen Einbau des Wärmetauschers bedingt. Die horizontale Einbaulage ist ein erheblicher Nachteil, da horizontale Einbauten in Wirbelschichten grundsätzlich einem hohen Verschließ ausgesetzt sind. Das in der Wirbelschicht zur Fluidisierung aufgewirbelte Inertmaterial wirkt hierbei wie ein Sandstrahlgebläse und erodiert horizontale Einbauten innerhalb von kurzer Zeit.

### III. Darstellung der Erfindung

### a) Technische Aufgabe

Es ist daher die Aufgabe gemäß der Erfindung, einen Wirbelschichttrockner mit externer Beheizung der Wirbelschicht so weiterzubilden, dass ohne Einbußen beim Wärmeübergang in die Wirbelschicht ein geringerer Verschleiß am Wärmetauscher auftritt. Weitere Aufgabe ist ein Verfahren zum Betrieb eines solchen Wirbelschichttrockners.

### b) Lösung der Aufgabe

Diese Aufgabe wird durch die Merkmale der Ansprüche 1 und 8 gelöst. Vorteilhafte Ausführungsformen ergeben sich aus den Unteransprüchen.

Die bekannten Trocknungsverfahren lassen sich verbessern, indem bei einem Wirbelschichttrockner der Wärmetauscher nicht horizontal, sondern im Wesentlichen vertikal eingebaut wird. Der Abrieb an dem Wärmetauscher durch das entlangströmende Bettmaterial der Wirbelschicht wird dadurch drastisch verringert, die Wärmeübertragung kann jedoch - vor allem mit zusätzlichen Maßnahmen - dennoch auf dem gleichen Niveau gehalten werden.

Die Durchströmung des Wärmetauschers mit Beheizungsmedium erfolgt z. B. derart, dass in dem vertikalen Wärmetauscher ein Teil des Strömungsquerschnitts für die aufwärts gerichtete Strömung genutzt wird, ein Teil für die abwärts gerichtete Strömung. Das Heizmedium würde somit beispielsweise bei einem von unten eingeschobenen Wärmetauschrohr mit oben geschlossenem Ende im äußeren Ringraum nach oben und dann, abgekühlt, und insbesondere kondensiert in einem Zentralrohr nach unten strömen, wobei Zentralrohr und Ringraum nahe des oberen Endes des Wärmetauschers, in diesem Fall des Wärmetauscher-Rohres, miteinander in Verbindung stehen.

Somit lässt sich erreichen, dass die Wärmetauscher quasi mit geschlossenem oberen Ende in die Wirbelschicht von unten eingebaut werden können. Das Wärmetauscher-Rohr kann in der Wirbelschicht auch mit Rippen versehen werden, um den Wärmeübergang in die Wirbelschicht zu verbessern.

Weiterhin kann zur Erhöhung des Wärmeeintrags auch die Wand der Trocknungskammer zumindest im Bereich der Wirbelschicht beheizt werden.

Eine Wirbelschicht ist bekannt für relativ hohe Wärmeübergangszahlen. Um nun auch von der Beheizungsseite im insbesondere rohrförmigen Wärmetauscher eine hohe Wärmeübergangsrate zu erreichen, wird in einer weiteren Ausführungsform als Beheizungsmedium ein kondensierendes Medium, z. B. Dampf, eingesetzt.

In diesem Falle würde das Beheizungsmedium in der Mitte des insbesondere rohrförmigen Wärmetauschers nach oben strömen und bei der Kondensation die innere Oberfläche des Wärmetauschers benetzen und dann an der Innenfläche als Tropfen wieder herabfließen, auch ohne dass ein Zentralrohr eingesetzt wird.

Zur Verbesserung der Benetzung kann in einer weiteren Ausführungsform die innere Oberfläche des insbesondere rohrförmigen Wärmetauschers mit einer Struktur versehen werden, die durch Kapillareffekte eine Benetzung der Oberfläche erzwingt, z. B. ein Gitter oder Gewebe.

Im Wärmetauscher ist vorzugsweise eine Abzugsöffnung für Kondensat und/oder Inertgasanteile vorzusehen.

Besonders vorteilhaft ist, wenn der Trockner mit Dampf als Fluidisierungsmedium betrieben wird. Mittels der bei der Verdampfung der Feuchtigkeit des Produktes frei werdenden Energie beheizt sich der Prozess dann teilweise selbst und zusätzlich wird nur ein einziges Medium benötigt, welches einerseits als Fluidisierungs- und damit Trocknungsmedium und andererseits als Beheizungsmedium des Wärmetauschers eingesetzt wird, was den gesamten Aufbau stark vereinfacht.

Die entstehenden, von Staub gereinigten Brüden können dann vorteilhaft sowohl verdichtet und zur Fluidisierung im Kreis geführt als auch zur Beheizung des Wärmetauschers verwendet werden.

Für die Beheizung ist es erforderlich, die Brüden insbesondere gemäß einem links drehenden Clausius-Rankine-Kreislauf zuvor zu verdichten. Um zu vermeiden, dass sich Inertgase in dem Wärmetauscher anreichern, ist vorzugsweise das geschlossene Ende des Wärmetauschers im Falle der Kondensation mit einem kleinen Zentralrohr ausgestattet, durch das Inertgase der Brüden aus dem Wärmetauscher abgezogen werden.

Die Staubabscheidung aus den Brüden ist für die Realisierung des Verfahrens theoretisch nicht notwendig, jedoch erweist sich dies in der Praxis als sinnvoll.

Insbesondere kann der Staubfilter dazu verwendet werden, um das getrocknete Gut aus dem Dampfstrom abzuscheiden und dann mittels einer darunterliegenden Austrageinrichtung abzuziehen.

Dem Staubfilter kann ein Windsichter vorgeschaltet werden, wo das Inertmaterial aus der Wirbelschicht abgeschieden und wieder der Wirbelschicht zugeführt wird. Der Staubfilter kann sowohl aus einem Gewebefilter, einem Zyklon oder einer Kombination aus beiden Aggregaten bestehen.

Die Wirbelschicht kann mit einem Austragsbereich versehen sein, aus dem mittels stärkerer Fluidisierung das getrocknete Produkt durch das Fluidisierungsmedium ausgetragen wird, insbesondere indem die Fluidisierung dabei so stark ist, dass das gegenüber dem Bettmaterial leichtere getrocknete Produkt über eine Austragskante hochgeschleudert und durch Umlenkung über die Austragskante hinweg ausgetragen wird.

Das so ausgetragene trockene Produkt kann getrennt oder gemeinsam mit dem übrigen Fluidisierungsmedium von Staub gereinigt werden.

Das ausgetragene und abgeschiedene trockene Produkt, das im Wesentlichen staubförmig anfällt, kann zur weiteren Verarbeitung pelletiert werden.

In einer weiteren Ausführungsform ist der Wärmetauscher als eine oder mehrere oben und unten und somit vollständig geschlossene Heatpipes ausgeführt, die mit einem Ende in die Wirbelschicht ragen und deren nicht in die Wirbelschicht ragendes anderes Ende beheizt wird.

Die Heatpipes können hierbei auch aus einem Rohrbündel der beheizten Enden und/oder einem Bündel der Enden, die in die Wirbelschicht hineinragen und dort Wärme abgeben, sowie zumindest einer jeweiligen Sammelleitung, die jeweils ein Rohrbündel zumindest teilweise zusammenfasst, wobei die beheizten Enden und die wärmeabgebenden Enden in den Wirbelschichtenden direkt oder deren Sammelleitungen mittels wenigstens einer Verbindungsleitung verbunden sind, bestehen.

Durch diese Ausführungsform werden die wärmeabgebende Seite der Heatpipe und die beheizte Seite geometrisch und konstruktiv voneinander entkoppelt, was eine große konstruktive Freiheit ermöglicht, indem die beiden unterschiedlichen Enden auch völlig unterschiedlich gestaltet werden können.

In einer weiteren Ausführungsform sind die beheizten Enden und/oder die Wärme abgebenden Wirbelschicht-Enden der Heatpipes mit Rippen versehen, um den Wärmeübergang zu verbessern.

Das zu trocknende Produkt wird vorteilhaft über wenigstens eine Öffnung in die Trocknungskammer eingebracht, in denen insbesondere durch Einblasen von Dampf die Verteilung des Produktes über die Wirbelschicht verbessert und vergleichmäßigt wird.

Die Inertgasanteile der Brüden aus der Trocknung, die oftmals geruchsbelastet sind, können vorteilhaft in einer Brennkammer verbrannt oder mit verbrannt werden, deren Abwärme in einem Wärmetauscher oder Dampferzeuger zur Erzeugung von Dampf herangezogen wird, der wiederum zum Betrieb des Trockners verwendet wird.

### c) Ausführungsbeispiele

Ausführungsformen gemäß der Erfindung sind im Folgenden beispielhaft näher beschrieben. Es zeigen:
- Bild 1:: die Trocknungsanlage,
- Bild 2:: den Wirbelschichttrockner,
- Bild 3:: einen Detailausschnitt des Wärmetauschers,
- Bild 4:: Heatpipes als Wärmetauscher.

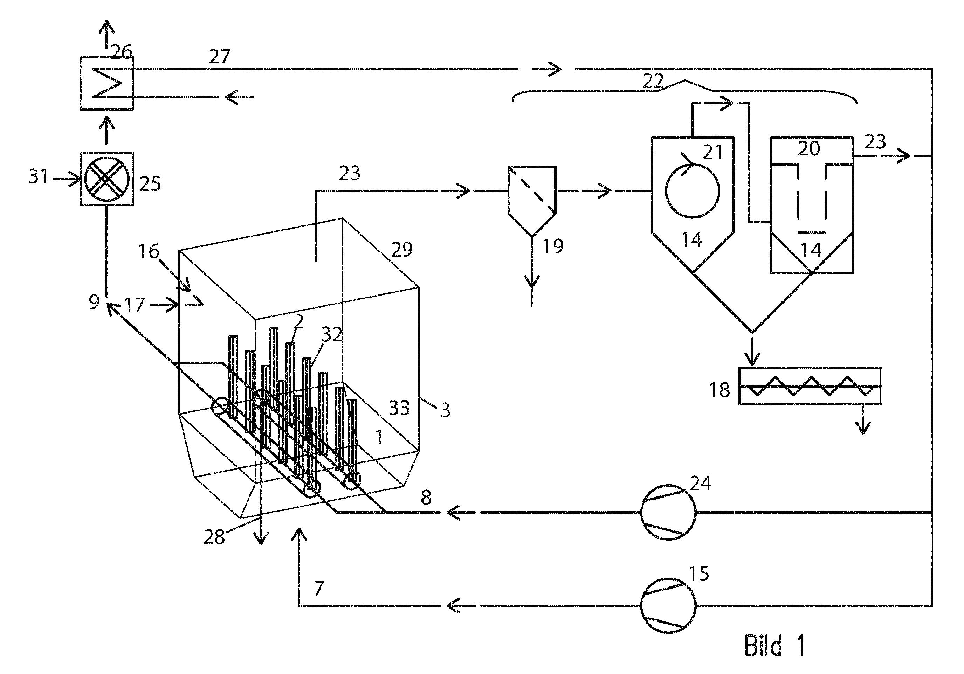

**Bild 1** zeigt die Gesamtanlage mit der Trocknungskammer 29 als zentralem Element, in deren unteren Bereich sich die Wirbelschicht 33 aus Bettmaterial und zu trocknendem Produkt befindet, welche durch ein von unten mittels Düsen oder über einen Lochboden eingeblasenes Fluidisierungsmedium 7, in diesem Fall vorzugsweise Dampf, fluidisiert wird und in welches von unten her eine Vielzahl von rohrförmigen Wärmetauschern 1, insbesondere Heatpipes 32, mit ihren oben geschlossenen Enden 2 hineinragen.

Über im oberen Bereich der Trocknungskammer 29 angeordnete eine oder mehrere Öffnungen 16 wird das zu trocknende Produkt in die Trocknungskammer 29 eingegeben, und kann dabei durch zusätzliches Einblasen von Luft oder Dampf 17 bereits beim Einbringen möglichst gleichmäßig über der Wirbelschicht 33 verteilt werden.

Diese Trocknungskammer 29 wird von zwei verschiedenen Kreisläufen, einmal betreffend das Fluidisierungsmedium 7 und das andere Mal das Beheizungsmedium 8, durchströmt, welches in beiden Fällen Dampf ist.

Betrachtet man sich zunächst den Kreislauf des Dampfes als Fluidisierungsmedium 7, so muss dieser zunächst vor dem Einpressen in die Wirbelschicht 33 mittels eines Verdichters 15 ausreichend verdichtet werden. Da die Beheizung der Wirbelschicht 33 nur teilweise über die Wärmetauscher 1 erfolgt, zum anderen Teil aber auch durch das Fluidisierungsmedium 7 in Form von Dampf, wird dieser Dampf beim Durchlaufen der Wirbelschicht 33 zum einen geringfügig abkühlen und seine Wärme an das zu trocknende Produkt in der Wirbelschicht 33 abgeben, zum anderen mit zusätzlicher Feuchtigkeit beladen werden, die er aus dem Produkt aufnimmt.

Der so beladene Dampf des Fluidisierungsmediums 7, die so genannten Brüden 23, werden aus der Oberseite der Trocknungskammer 29 abgezogen.

Da sie auch Verunreinigungen in Form von Feststoffen - sowohl kleine Bestandteile des Bettmaterials als auch kleinteilige Produkte - enthalten, durchlaufen sie eine Staubreinigungsvorrichtung 22, in diesem Fall zunächst einen Sichter 19, vorzugsweise in Form eines Windsichters, der die schweren Feststoffe abscheidet und unmittelbar wieder der Wirbelschicht 33 zuführt.

Die Brüden 23 durchlaufen anschließend zunächst einen Zyklon 21 und anschließend einen Filter, insbesondere einen Gewebefilter 20, wo nun die kleineren Feststoffpartikel, der Staub 14, aus den Brüden 23 abgeschieden und mittels einer Austrageinrichtung 18 zur weiteren Verarbeitung, beispielsweise Pelletierung, ausgetragen wird.

Die gereinigten Brüden 23 werden nunmehr unter anderem wieder dem Verdichter 15 zur Aufbereitung und erneuten Verwendung als Fluidisierungsmedium 7 zugeführt und damit rezirkuliert.

Als Beheizungsmedium 8, welches die in die Wirbelschicht 33 hineinragenden Wärmetauscher 1 beheizt, wird ebenfalls Dampf verwendet, der vor dem Einbringen in die Wärmetauscher 1 wiederum durch einen Verdichter 24 auf das notwendige Maß verdichtet wird.

Beim Durchlaufen des Wärmetauschers 1 kondensiert ein Teil des Dampfes, so dass der den Wärmetauscher 1 und damit die Trocknungskammer 29 verlassende Dampf in Form von Brüden 9 mit Kondensat angereichert ist.

Die Wand 3 der Trocknungskammer 29 kann zur Unterstützung der Beheizung ebenfalls selbst beheizt werden, beispielsweise, indem sie ebenfalls von dem Dampf 8 durchströmt wird wie die Wärmetauscher 1.

Da der als Beheizungsmedium 8 zugeführte Dampf teilweise aus den gereinigten Brüden 23 des Fluidisierungsmediums 7 gespeist wird, welche aus dem zu trocknenden Produkt brennbare Gasbestandteile aufnehmen und enthalten, enthalten somit auch die Brüden 9 des Beheizungsmediums 8 solche brennbaren Anteile, die nach Durchlaufen der Wärmetauscher 1 in einer Brennkammer 25, ggf. unter zusätzlicher Zugabe von Brennstoff 31, verbrannt werden.

Die dabei entstehende Verbrennungswärme wird in einem Dampferzeuger 26 zur Erzeugung von neuem Dampf aus eingespeistem Wasser verwendet, welcher über eine Zuführung 27 dem Dampfkreislauf des Beheizungsmediums 8 zugeführt wird und den Verlust an Dampf durch die Verbrennung der Brüden 9 wieder ausgleicht.

Auf diese Art und Weise ist der Energiebedarf für die Trocknung wesentlich geringer als bei direkter Trocknung und ähnlich hoch wie bei indirekter Trocknung mit quer in der Strömung der Wirbelschicht stehenden Wärmetauschern, ohne den nachteiligen starken Abrieb an den Wärmetauschern in Kauf nehmen zu müssen.

Diese Vorteile werden durch spezifische Ausbildung einzelner Komponenten der Gesamtanlage zusätzlich unterstützt:

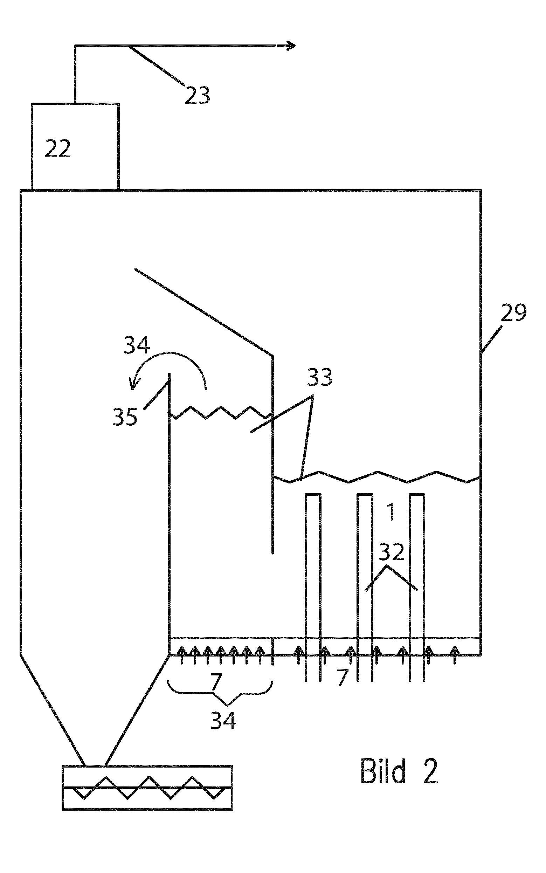

**Bild 2** zeigt die Trocknungskammer 29 in vergrößerter Einzeldarstellung.

Dabei ist ersichtlich, dass neben dem normalen Bereich der Wirbelschicht 33, der von den Wärmetauschern 1 beheizt wird zum Zwecke der Trocknung und zusätzlich von Fluidisierungsmedium 7 von unten durchströmt wird, daneben ein Austragsbereich 34 vorgesehen ist, in dem das Fluidisierungsmedium 7 mit wesentlich höherem Druck und/oder Menge eingeströmt wird, so dass die Wirbelschicht 33 hier eine weitaus höher liegende Oberfläche besitzt.

Mittels eines über diesem Bereich schräg angeordneten Leitbleches wird erreicht, dass die in der Regel leichteren getrockneten Produkte über die Oberfläche der Wirbelschicht 33 mittels des nach oben strömenden Fluidisierungsmediums 7 mitgerissen werden und aufgrund des schräg stehenden Leitbleches über eine diesen Austragsbereich 34 seitlich begrenzende Wand und deren freie Abscheide-Oberkante 35 hinweg transportiert werden und in einen Sammler für getrocknetes Produkt fallen, aus dessen unterem Ende sie wiederum auf einfache Art und Weise mittels einer Austragseinrichtung 18 abgezogen werden können.

Im oberen Bereich der Trocknungskammer 29 ist wiederum die Staubreinigungsvorrichtung 22 angedeutet, welche die oben aus der Trocknungskammer 29 abziehenden Brüden 23 durchlaufen müssen.

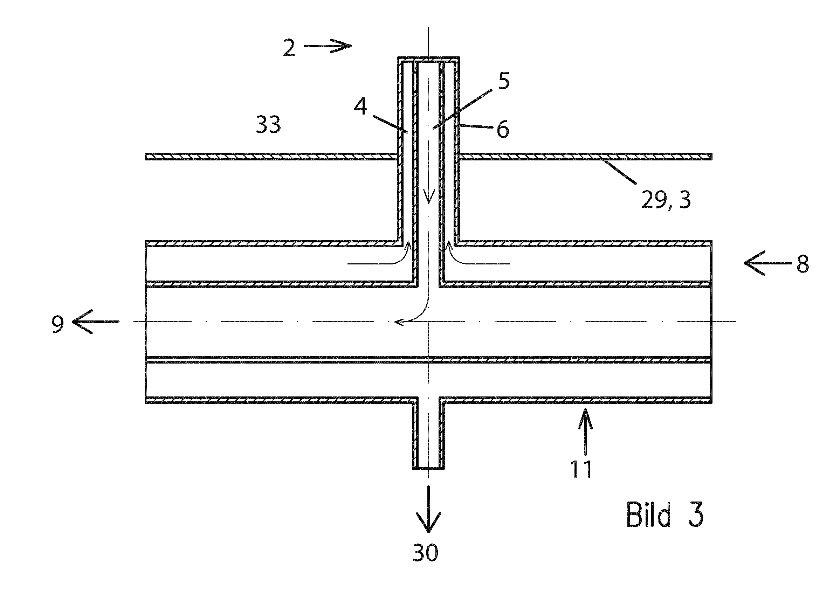

**Bild 3** zeigt eine Einzeldarstellung eines Wärmetauscher 1 in Form eines Rohres 6, die mit seinem geschlossenen oberen Ende 2 von unten in die Trocknungskammer 29 und damit die Wirbelschicht 33 hineinragt.

In dem oben geschlossenen Rohr 6 des Wärmetauschers 1 ist ein in der Mitte verlaufendes Zentralrohr 5 angeordnet, welches vor dem oberen Ende des äußeren Rohres 6 endet und selbst oben offen ist.

Der somit zwischen Zentralrohr 5 und äußerem Rohr 6 entstehende Ringraum 4 wird von einer Sammelleitung 11, der mehrere, nicht dargestellte Rohre 6 miteinander verbinden kann, mit Beheizungsmedium 8 in Form von Dampf durchströmt, der seine Wärme teilweise im oberen Bereich des Rohres 6 nach außen in die Wirbelschicht 33 abgibt und dadurch teilweise kondensiert und das teilweise kondensierte Beheizungsmedium 8 somit im Zentralrohr 5 nach unten strömt und den Wärmetauscher als Brüden 9 verlässt.

Auch die Sammelleitung 11 kann in diesem Fall als doppelwandiges Rohr ausgebildet sein, in dessen äußeren Ringraum der zugeführte Dampf als Beheizungsmedium 8 strömt und in dessen inneren Zentralraum die abzuführenden Brüden 9 geführt sind.

Im äußeren Ringraum, vorzugsweise an seiner Unterseite, ist ferner eine Öffnung zum Abziehen von Kondensat 30 vorhanden.

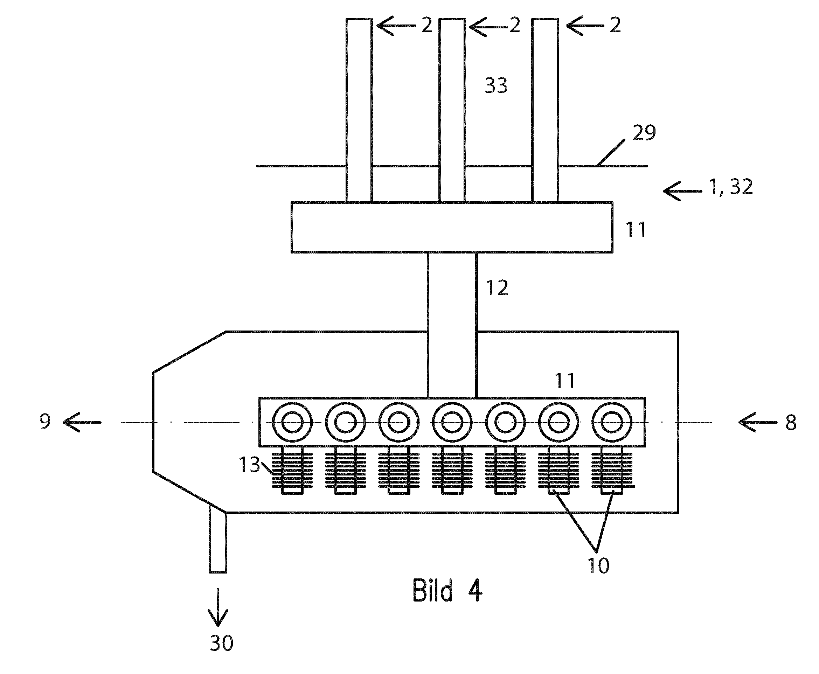

**Bild 4** zeigt ferner eine Mehrzahl von Heatpipes 32, die als Wärmetauscher verwendet werden, sowie deren Aufteilung in obere Enden 2 und untere Enden 10, in die jede Heatpipe 32 aufgeteilt ist:
Die oberen Enden 2 ragen von unten in die Trocknungskammer 29 und damit die Wirbelschicht 33 hinein, und sind durch eines dieser oberen Enden 2 an ihrem außerhalb der Trocknungskammer 29 liegenden hinteren Ende über eine ersten Sammelleitung 11 miteinander verbunden.

Die unteren, ebenfalls geschlossenen, zu beheizenden Enden 10 der Heatpipes 32 befinden sich in einer Heizkammer, die beispielsweise vom Beheizungsmedium 8 in Form von Dampf durchströmt wird, wobei die zu beheizenden Enden 10 zur besseren Wärmeaufnahme mit Rippen 13 auf ihrer Außenseite ausgestattet sein können.

Diese zu beheizenden Enden 10 sind ebenfalls mittels einer zweiten Sammelleitung 11 untereinander verbunden. Dies ermöglicht es, die Wärme abgebenden oberen Enden 2 und die Wärme aufnehmenden, unteren Enden 10 hinsichtlich Form, Dimensionierung und ggf. auch Material völlig unterschiedlich voneinander, je nach den jeweiligen Gegebenheiten, gestalten zu können.

Die beiden Sammelleitungen 11 sind über ein oder mehrere Rohrleitungen 12 miteinander verbunden, so dass das Kondensationsmittel im Inneren der Heatpipes 32 problemlos nach Verdampfen im unteren beheizten Ende 10 durch den unteren Sammler 11 in die Rohrleitung 12 und den oberen Sammler 11 in das obere Ende 2 aufsteigen, dort in der Wirbelschicht 33 einen Teil seiner Wärme abgeben, kondensieren und von dort wiederum zurück in das untere Ende 10 zirkulieren kann.

Der Abzug für Kondensat 30 ist in diesem Fall am unteren Ende der Beheizungskammer angeordnet, da die Heatpipes 32 in der Regel in sich geschlossen sind.

### BEZUGSZEICHENLISTE

- 1: Wärmetauscher
- 2: geschlossenes Ende
- 3: Wand
- 4: Ringraum
- 5: Zentralrohr
- 6: Rohr
- 7: Fluidisierungsmedium
- 8: Beheizungsmedium
- 9: Brüden
- 10: Ende
- 11: Sammler
- 12: Rohrleitung
- 13: Rippe
- 14: Staub
- 15: Verdichter
- 16: Öffnung
- 17: Dampf
- 18: Austrageinrichtung
- 19: Sichter
- 20: Gewebefilter
- 21: Zyklon
- 22: Staubreinigungsvorrichtung
- 23: Brüden
- 24: Verdichter
- 25: Brennkammer
- 26: Dampferzeuger
- 27: Zuführung
- 28: Düsenboden
- 29: Trocknungskammer
- 30: Kondensat
- 31: Brennstoff
- 32: Heatpipe
- 33: Wirbelschicht
- 34: Austragsbereich
- 35: Abscheide-Oberkante

## Patentansprüche

1. Trockner für nasse Produkte, zumindest bestehend aus
● einer Trocknungskammer (29), die eine stationäre Wirbelschicht (33) enthält,
● einen Düsenboden (28) unter der Wirbelschicht (33), durch den das Fluidisierungsmedium (7) eingeblasen wird,
● einem Wärmetauscher (1) zur Beheizung des Trockners (3), insbesondere der Wirbelschicht (33),
**dadurch gekennzeichnet, dass**
der Wärmetauscher (1), insbesondere die Wärmetauschflächen des Wärmetauschers (1), im Wesentlichen senkrecht eingebaut ist/sind.

2. Trockner nach einem der vorhergehenden Ansprüche,
**dadurch gekennzeichnet, dass**
- der Wärmetauscher (1) insbesondere im Bereich der Wirbelschicht (33) mit Rippen (13) versehen ist, und/oder
- der Wärmetauscher (1) oben ein geschlossenes Ende (2) hat, also nur von unten in die Wirbelschicht (33) hineinragt, und insbesondere nach unten aus der Trocknungskammer (29) herausgezogen werden kann.

3. Trockner nach einem der vorhergehenden Ansprüche,
**dadurch gekennzeichnet, dass**
- der Wärmetauscher (1) zwei insbesondere getrennte Strömungswege (4, 5) hat, wobei das Beheizungsmedium (8) in einem nach oben und im anderen nach unten strömt, und/oder
- im Wärmetauscher (1) an der Beheizungsseite ein Abzug für Inertgasanteile vorgesehen ist, und/oder
- das Innere, insbesondere die Innenseite der Wand (3) des Wärmetauschers (1) mit einer Kapillarstruktur versehen ist.

4. Trockner nach einem der vorhergehenden Ansprüche,
**dadurch gekennzeichnet, dass**
- die Wand (3) der Trocknungskammer (29) im Bereich zumindest eines Teils der Wirbelschicht (33) beheizt ist, und/oder
- der Wärmetauscher (1) ein oder mehrere Heatpipes (32) sind, deren außerhalb der Wirbelschicht (33) liegendes Ende (10) beheizt ist.

5. Trockner nach einem der vorhergehenden Ansprüche,
**dadurch gekennzeichnet, dass**
- mehrere Heatpipes (32) mit wenigstens einem verbindenden Sammler (11) zwischen verdampfender und kondensierender Seite der Heatpipes (32) und zu einem Heatpipe-Bündel zusammengefasst sind, und insbesondere
- die verdampfenden Enden und die kondensierenden Enden der Heatpipe-Bündel jeweils mit getrennten Sammlern (11) versehen sind und Dampf (17) sowie Kondensat (30) über ein oder mehrere Verbindungsrohre (12) zwischen den Sammlern (11) hin und her strömen.

6. Trockner nach einem der vorhergehenden Ansprüche,
**dadurch gekennzeichnet, dass**
die Heatpipe-Bündel der verdampfenden Enden (10) und der kondensierenden Enden geometrisch unterschiedlich ausgebildet sind.

7. Trockner nach einem der vorhergehenden Ansprüche,
**dadurch gekennzeichnet, dass**
die Staubreinigungsvorrichtung (22) einen Filter, insbesondere Gewebefilter (20), und/oder einen Zyklon (21) und/oder einen Sichter (19) umfasst.

8. Verfahren zum Trocknen von Einsatzstoffen mittels eines Wirbelschichttrockners, dessen Wirbelschicht (33) mittels eines Wärmetauschers (1) durch ein Beheizungsmedium (8) beheizt wird,
**dadurch gekennzeichnet, dass**
das Beheizungsmedium (8) während der Wärmeabgabe im Wärmetauscher (1) zumindest teilweise kondensiert.

9. Verfahren nach Anspruch 8,
**dadurch gekennzeichnet, dass**
- Dampf (17) als Fluidisierungsmedium (7) eingesetzt wird, und/oder
- der Trockner, insbesondere der Wärmetauscher (1), mit Dampf (17) beheizt wird (8).

10. Verfahren nach einem der vorhergehenden Verfahrensansprüche, **dadurch gekennzeichnet, dass**
- für die Fluidisierung zumindest teilweise die Brüden (23) verwendet werden, die bei der Trocknung entstehen, und/oder
- der beheizende Dampf (17) zumindest teilweise durch Verdichtung (24) der bei der Trocknung entstandenen Brüden (23) bereitgestellt wird.

11. Verfahren nach einem der vorhergehenden Verfahrensansprüche, **dadurch gekennzeichnet, dass**
- die zur Fluidisierung oder zur Beheizung benutzten Brüden (23) vor der Verdichtung von Staub (14) gereinigt werden, und insbesondere
- zur Reinigung insbesondere mittels eines Sichters (19) mitgerissenes Bettmaterial abgeschieden und wieder der Wirbelschicht (33) zugeführt wird.

12. Verfahren nach einem der vorhergehenden Verfahrensansprüche, **dadurch gekennzeichnet, dass**
- die Wirbelschicht (33) auch einen Austragsbereich (34) umfasst, der so stark fluidisiert wird, dass trockenes Produkt über eine Abscheide-Oberkante (35) transportiert wird, und insbesondere
- das abgezogene trockene Produkt der Staubreinigung (22) zugeführt wird.

13. Verfahren nach einem der vorhergehenden Verfahrensansprüche,
**dadurch gekennzeichnet, dass**
das trockene Produkt nach Abzug aus dem Trockner pelletiert wird.

14. Verfahren nach einem der vorhergehenden Verfahrensansprüche, **dadurch gekennzeichnet, dass**
- die aus der Trocknungskammer (29) abgezogenen Inertgase, insbesondere der beheizende Dampf (17), nach Durchlaufen der Wärmetauscher (1) verbrannt oder mitverbrannt und damit die organischen Bestandteile zersetzt und oxidiert werden, und insbesondere
- bei der Verbrennung der Inertgase zumindest unter anderem Dampf (17) erzeugt wird, und insbesondere
- der bei der Verbrennung der Inertgas erzeugte Dampf (17) zumindest teilweise dem Trockner zugeführt wird.
